# EUROPÄISCHE PATENTSCHRIFT

(11) **EP 1 358 267 B1**
(45) Veröffentlichungstag und Bekanntmachung des Hinweises auf die Patenterteilung: **24.05.2006**
(21) Anmeldenummer: 02706651.3
(22) Anmeldetag: 30.01.2002
(51) Int. Cl.: C08L 67/04

(54) **UMWELTFREUNDLICHE ZUSAMMENSETZUNG**
ENVIRONMENTALLY FRIENDLY COMPOSITION
COMPOSITION COMPATIBLE POUR L'ENVIRONNEMENT

(30) Priorität: 31.01.2001 DE 10104004
(43) Veröffentlichungstag der Anmeldung: 05.11.2003
(73) Patentinhaber: Walcher, Ulrich, 89281 Altenstadt (DE); Dinkelaker, Albrecht, 79669 Zell im Wiesental (DE)
(72) Erfinder: Walcher, Ulrich, 89281 Altenstadt (DE); Dinkelaker, Albrecht, 79669 Zell im Wiesental (DE)
(74) Vertreter: Lasch, Hartmut
(86) Internationale Anmeldenummer: PCT/DE2002/000320
(87) Internationale Veröffentlichungsnummer: WO 2002/060990

(56) Entgegenhaltungen:
- EP-A- 0 708 148
- WO-A-94/28061
- DE-A- 3 220 324
- PATENT ABSTRACTS OF JAPAN vol. 1996, no. 11, 29. November 1996 (1996-11-29) & JP 08 188706 A (GUNZE LTD), 23. Juli 1996 (1996-07-23)

## Beschreibung

Die vorliegende Erfindung betrifft eine umweltfreundliche Zusammensetzung, enthaltend (A) mindestens ein kristallines Polycaprolacton (PCL) oder ein Gemisch solcher Polycaprolactone sowie (B) mindestens ein Wachs mit einem Schmelzpunkt im Bereich von 50°C bis 180°C oder eine Mischung solcher Wachse und (C) gegebenenfalls weitere Zusatzstoffe. Sie ist ferner auf hieraus hergestellte Gegenstände und ein Verfahren zu ihrer Herstellung gerichtet.

Zusammensetzungen auf der Basis von Polycaprolactonen in Verbindung mit bei Raumtemperatur festen Additiven sind bekannt. So beschreibt die WO 94/28061 A1 eine Zusammensetzung mit einem biologisch abbaubaren Polyester, der aus der Gruppe der Polycaprolactone gewählt sein kann und dem eine Vielzahl an Additiven, z.B. hochsiedende Ester von polybasischen Säuren, wie Phthalate und Isophthalate, Zitrate, Fumarate, Glutamate, Adipate, Sebacinsäurederivate und Azelainsäurederivate, hochsiedende und gegebenenfalls substituierte und/oder veresterte Glykole, Polyglykole, Polyoxyalkene und Glycerin, Sulfonsäurederivate, Epoxyderivate, substituierte Fettsäuren, Phosphorsäurederivate, chlorierte Paraffine und polymere Ester, zugesetzt sein können. Die EP 0 708 148 A1 beschreibt eine für Blasfolien geeignete Formmasse auf der Basis von biologisch abbaubaren aliphatischen Polyestern, wie unter anderem Polycaprolactonen, wobei den Polyestern unter anderem polare Gleitmittel und Wachse mit einem Schmelzpunkt von unter 170°C zugesetzt sein können. Der DE 32 20 324 A1 ist eine Kunstharzmasse auf der Basis von Polycaprolactonen entnehmbar, welche thermoplastische Harze und chlorierte Polyolefine enthält. Ferner enthält die Kunstharzmasse einen Klebrigmacher, der aus der Gruppe Kolophonium, Maleinharz, (hydrierte) Harzester, Polyterpenharz, C₅- und C₆-Petrolharze, Dicyclopentadienpetrolharz, Styrolharz, Alkylphenolharzen und Terpenphenolharzen gewählt ist. Die JP 08-188 706 A beschreibt eine für Mülltüten geeignete, biologisch abbaubare Zusammensetzung aus Polycaprolactonen und einem von Mikroorganismen erzeugten Harz auf Polyesterbasis.

Die erfindungsgemäße Zusammensetzung ist beispielsweise für die Verarbeitung in der Verpackungsindustrie in ausgezeichneter Weise geeignet. In der Verpackungsindustrie sind thermoplastische Zusammensetzungen, welche in der Entsorgung einfacher zu handhaben sind als herkömmliche Kunststoffe, jedoch mit diesen in den Verarbeitungs- und Anwendungseigenschaften gleichwertig sind, von großer Bedeutung.

Es wurde nun gefunden, dass eine Zusammensetzung der eingangs genannten Art, welche dadurch gekennzeichnet ist, dass das Wachs der Komponente (B) aus der Gruppe Castorwachs, d.h. teilweise oder gänzlich gehärtetes (hydriertes) Rizinusöl, gewählt ist, wobei das Gewichtsverhältnis der Komponente (A) zur Komponente (B) im Bereich von etwa 05:95 bis 95:05 beträgt, überraschenderweise die genannten positiven Eigenschaften aufweist.

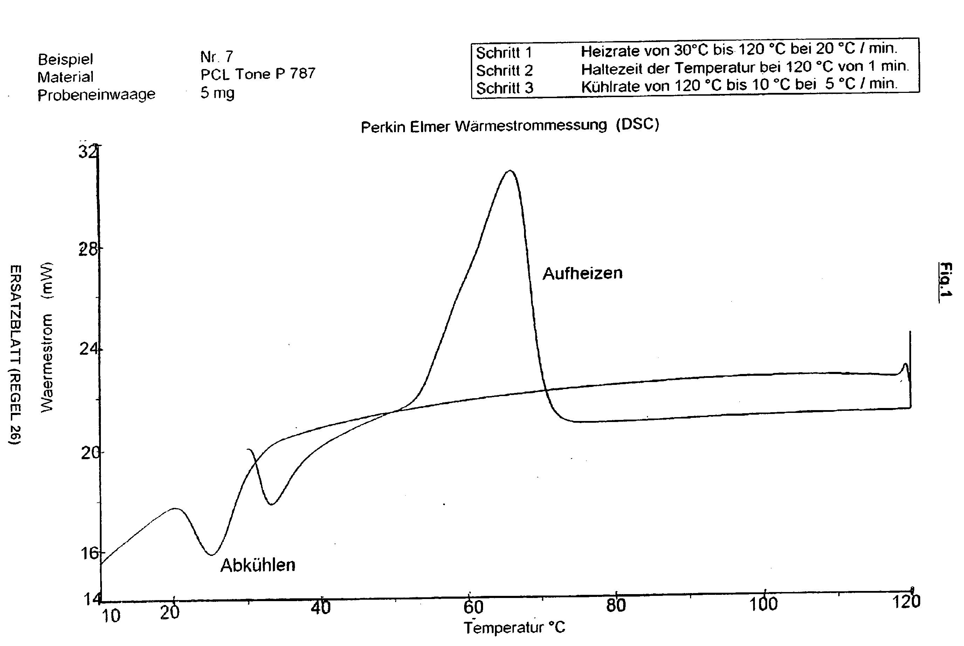

Dies ist deshalb überraschend, weil sich die Verarbeitbarkeit von Polycaprolactonen zu Blasfolien durch die erfindungsgemäße Zumischung von an sich sprödem Wachs wesentlich verbessert, so dass diese mit herkömmlichen Kunststoffen, wie zum Beispiel Polyethylen, vergleichbar wird. Die hergestellte Mischung lässt sich auf Standardblasfolienanlagen ohne Einschränkungen verarbeiten. Dies gelingt bereits mit einer Zusammensetzung, welche nur die beiden Komponenten (A) und (B) enthält, in Abwesenheit von weiteren Verarbeitungshilfsstoffen und ohne die mechanischen Eigenschaften von Polycaprolacton wesentlich zu verändern. Überraschenderweise zeigt die erfindungsgemäße Zusammensetzung im Vergleich zu reinem Polycaprolacton schon bei Temperaturen von 55-60°C ein ausgeprägtes und rasches Kristallisationsverhalten (siehe DSC Kurven Bild 1-3). Dabei bleibt trotz des hohen Anteils an relativ sprödem Wachs, wie beispielsweise sprödem Castorwachs, die Flexibilität, Schlagzähigkeit und Reißdehnung weitgehend erhalten.

Überraschenderweise ergeben sich ferner bei Folien, die mit der erfindungsgemäßen Zusammensetzung hergestellt wurden, nach einer Kaltverreckung ungeahnte Softtoucheigenschaften.

Die Erfindung ist in den Patentansprüchen definiert. Vorteilhafte Weiterbildungen sind in den abhängigen Ansprüchen wiedergegeben.

Die Komponente (A) der erfindungsgemäßen Zusammensetzung ist ein kristallines Polycaprolacton, vorzugsweise ein hoch kristallines Polycaprolacton. Dieses hat vorzugsweise ein Molekulargewicht von etwa 20.000 bis 180.000 und einen Schmelzbereich von etwa 50°C bis 120°C, vorzugsweise 58°C bis 62°C, und eine Kristallisationstemperatur unter 40°C. Solche Polycaprolactone sind kommerziell erhältlich, beispielsweise unter den Handelsnamen Tone® Polymer P767E und Tone® P787 Polymer (Union Carbide Corp.) oder Capa® 640, Capa® 650 und Capa® 680 (Solvay Interox Ltd.).

Die Komponente (B) ist vorzugsweise gehärtetes, das heißt teilweise oder gänzlich hydriertes, Rizinusöl (Castorwachs). Castorwachs ist in der Regel eine Mischung bestehend aus Glyceryltri-12-hydroxystearat (ca. 70-99%) und aus Glyceriden (ca. 1-30%) der 12-Hydroxystearinsäure, der Stearinsäure und der Dioxystearinsäure. Vorzugsweise verwendet man Castorwachs bestehend aus Glyceryltri-12-hydroxystearat (ca. 75-90%) und aus Glyceriden (ca. 10-25%) der 12-Hydroxystearinsäure, der Stearinsäure und der Dioxystearinsäure, mit einer Jodzahl von 0-5, einem Schmelzbereich von 81-92°C, vorzugsweise 83-88°C. Solches Castorwachs ist beispielsweise erhältlich unter dem Handelsnamen Loxiol® G 15 (Cognis AG) oder einfach als hydriertes Rizinusöl (Oleo-Chemie AG).

Während die Komponente (B) vorzugsweise gehärtetes, das heißt teilweise oder gänzlich hydriertes, Rizinusöl (Castorwachs) darstellt, kann die Komponente (B), je nach Anwendungsgebiet, insbesondere auch ein Gemisch eines anderen Wachses oder mehrerer anderer Wachse mit Castorwachs darstellen. Eine bevorzugte Ausführung sieht vor, dass die Komponente (B) ein Gemisch eines Hydroxycarbonsäureamides mit Resten von (C₁-C₄₀) -Hydroxycarbonsäuren und (C₁-C₄₀)-Carbonsäuren oder mehrerer solcher Hydroxycarbonsäureamide mit Castorwachs aufweist, wobei das Hydroxycarbonsäureamid einen Schmelzbereich von 50°C bis 180°C, insbesondere von 70°C bis 180°C, aufweist, wobei das Hydroxycarbonsäureamid vorzugsweise aus der Gruppe der mit den Handelsnamen "Adogen 42", "Adogen 58" und "Adogen 73" (Ashland Chem. Corp.) bezeichneten Hydroxycarbonsäureamide gewählt sind. Ferner eignet sich als Komponente (B) insbesondere auch ein Gemisch einer Metallseife einer Hydroxycarbonsäure oder mehrerer solcher Metallseifen mit Castorwachs, wobei die Metallseife der Hydroxycarbonsäure einen Schmelzbereich von 50°C bis 180°C, insbesondere von 70°C bis 180°C, aufweist, wobei die Metallseife einer Hydroxycarbonsäure vorzugsweise ein Hydroxycarbonsäuresalz aus der Gruppe Calcium, Magnesium und Zink, insbesondere aus der Gruppe Calcium-12-oxystearat und Magnesium-12-hydroxystearat, ist.

Beispiele für Wachse, welche für die Verwendung als Komponente (B) in Mischung mit Castorwachs eingesetzt werden können, sind in Tabelle 1 aufgeführt (Zeilen 2 ff). Wird ein Gemisch eines solchen anderen Wachses oder mehrerer solcher anderer Wachse mit Castorwachs verwendet, so beträgt der Gewichtsanteil des anderen Wachses oder des anderen Wachsgemisches an der Komponente (B) 1 bis 99%, vorzugsweise 2 bis 70%. Die anderen Wachse können fest und/oder flüssig sein und haben einen Schmelzbereich von 50-180°C, vorzugsweise von 70-180°C.

**Tabelle 1**

| **Nr.** | **Chemische Bezeichnung** | **Handelsname** | **Fp.°C** | **Hersteller** |
|---|---|---|---|---|
| 1 | Teilhydriertes Rizinusöl | Castorwachs MP 80 | 70-80 | NL Industries, Inc. |
| | | Castorwachs MP 70 | 70-80 | NL Industries, Inc. |
| 2 | Triglyceride bestehend aus Mono-, Di-, Trihydroxycarbonsäuren und Carbonsäuren, hergestellt durch Hydrierung von epoxidierten Ölen(a), Fetten, Wachsen mit hohem Gehalt an Ölsäure und/oder Erucasäure, Linolsäure, Linolensäure und andere einfach und mehrfach ungesättigten Fettsäuren, hergestellt aus Rapsölen, Olivenölen, Sonnenblumenölen, Rizinusöl, Triolein, Sojaölen, Leinölen und anderen Ölen | (a)EDENOL 81/82 | flüssig | Cognis /Henkel |
| | | (a)EDENOL B35 | flüssig | Cognis /Henkel |
| | | (a)EDENOL B316 | flüssig | Cognis /Henkel |
| 3 | Triglyceride bestehend aus Di-, Tri-, Polyhydroxycarbonsäuren und Carbonsäuren, hergestellt durch Hydroxylierung von einfach und mehrfach ungesättigten Ölen (b), Fetten und Wachsen | (b)Sojaöle | | |
| | | (b)Rapsöle | | |
| | | (b)Sonnenblumenöle | | |
| | | (b)Rizinusöle | | |
| | | (b)Olivenöle | | |
| | | (b)Leinöle | | |
| | | (b)andere native Öle | | |
| 4 | Hydroxycarbonsäureamide | Adogen 42 | 103-107 | Ashland Chem. Corp. |
| | | Adogen 58 | 72-76 | Ashland Chem. Corp. |
| | | Adogen 73 | 75-85 | Ashland Chem. Corp. |
| 5 | Hydroxycarbonsäuresalze, insbesondere aus Ca, Mg, Zk | LIGA Calcium-12-oxystearat | 135-155 | Greven Fettchemie |
| | | Magnesium-12-hydroxystearat | 120-140 | Bärlocher |

Die Wachse der Komponente (B) - siehe Tabelle 1, Beispiel 1 bis 3 - bestehen aus Estern des Glycerins, welche lineare, verzweigte oder cyclische, einfach oder mehrfach ungesättigte oder gesättigte, teilhydrierte oder vollhydrierte, dimerisierte und polymerisierte Hydroxycarbonsäureester und/oder Carbonsäureester enthalten. Ester des Glycerins enthalten bekanntermaßen jeweils mindestens einen Rest einer Säure und mindestens einen Rest des Polyols Glycerin. Die erfindungsgemäß verwendeten Ester bzw. Wachse sind an sich bekannt. Die erfindungsgemäß zu verwendenden Hydroxycarbonsäureester des Glycerins enthalten Reste von (C₁-C₄₀)-Hydroxycarbonsäuren und (C₁-C₄₀)-Carbonsäuren mit Molgewichten im Bereich von 40 bis 2000. Die Ester können Reste von Mono-, Di-, Tri- und Polycarbonsäuren enthalten. Ebenso enthalten diese Hydroxycarbonsäureester Reste von Alkoholen und Polyalkoholen, das heißt von Mono-, Di-, Tri- und/oder Polyolen, wobei diese Alkohole primäre, sekundäre und/oder tertiäre Alkoholreste sein können mit Kohlenstoffkettenlängen mit 1 bis 24 Kohlenstoffatomen und Molgewichten im Bereich von 30 bis 1000. Die Polyolreste können im weiteren miteinander verethert sein, pro Molekül 4 bis 50 Kohlenstoffatome und Molgewichte im Bereich von 30 bis 5000 aufweisen.

Weitere geeignete Wachse der Komponente (B) - siehe Tabelle 1, Beispiel 4 - bestehen aus Amiden, welche lineare, verzweigte oder cyclische, einfach oder mehrfach ungesättigte oder gesättigte, teilhydrierte oder vollhydrierte, dimerisierte und polymerisierte Hydroxycarbonsäureamide enthalten. Hydroxycarbonsäureamide enthalten bekanntermaßen jeweils mindestens einen Rest einer Hydroxycarbonsäure und mindestens einen Rest einer Amidgruppe. Die erfindungsgemäß verwendeten Amide bzw. Wachse sind an sich bekannt. Die erfindungsgemäß zu verwendenden Hydroxycarbonsäureamide enthalten Reste von (C₁-C₄₀)-Hydroxycarbonsäuren und (C₁-C₄₀)-Carbonsäuren mit Molgewichten im Bereich von 40 bis 2000.

Weitere geeignete Wachse der Komponente (B) - siehe Tabelle 1, Beispiel 5 - bestehen aus Metallseifen einer Hydroxycarbonsäure, vorzugsweise auf der Basis von Calcium-, Magnesium- und Zinkseifen, welche lineare, verzweigte oder cyclische, einfach oder mehrfach ungesättigte oder gesättigte, teilhydrierte oder vollhydrierte, dimerisierte Verbindungen sind. Solche Metallseifen enthalten bekanntermaßen jeweils mindestens einen Hydroxycarbonsäurerest, der mit einwertigen Metallen, wie Lithium, Natrium, Kalium, und mit zwei- und mehrwertigen Metallen, wie Magnesium, Calcium, Aluminium, Zink und Eisen, Fettsäuresalze (Metallseifen) bildet. Die erfindungsgemäß zu verwendenden Metallseifen auf der Basis von Hydroxycarbonsäuren weisen eine Kettenlänge von C₁-C₄₀ und ein Molgewicht im Bereich von 40 bis 2000 auf und enthalten ein-, zwei- und mehrwertige Metalle.

Die erfindungsgemäße Zusammensetzung kann außer den Komponenten (A) und (B) weitere Zusatzstoffe (Komponente C) enthalten. Solche Zusatzstoffe sind z.B. Füllstoffe, Gleitmittel, Plastifizierungsmittel, Modifikatoren (Zugfestigkeit, Steifigkeit, Schlagzähigkeit, Weiterreißfestigkeit und Verarbeitungsviskosität), sowie Stabilisatoren, Flammschutzmittel, Farbstoffe, anorganische und organische Pigmente, Ruß, Verschäumungsmittel oder sonstige an sich in der Polymerchemie bekannte Zusatzstoffe. Solche Zusatzstoffe haben funktionelle Eigenschaften, wie Antistatik, Antifogging, Fungizide, Schädlingsbekämpfungsmittel, Herbizide, Dünger usw. Die Zusatzstoffe werden der Zusammensetzung in den an sich bekannten Mengen zugesetzt.

Füllstoffe sind beispielsweise Titandioxid, Calciumcarbonat, Dolomit, Eisenoxide, Talkum, Kaolin, Glimmer, Bentonite, Magnesiumoxid, Siliciumdioxid pyrogen bzw. gefällt, Aluminiumoxid, Chitosan, Cellulosefasern, bzw. Pflanzenfasern, Hemicellulosen, Celluloseester, Celluloseether, Stärkeester, Stärkeether, Hydroxyalkylcellulose, Hydroxyalkylstärke, Keramikpulver oder Holz. Vorzugsweise verwendet man die Füllstoffe, je nach deren Art, in einem Gewichtsanteil von 3-40%, vorzugsweise 5-25%, insbesondere 10-20%, bezogen auf das Gesamtgewicht der Zusammensetzung.

Gleitmittel sind beispielsweise Calciumstearat, Aluminiumstearat, Magnesiumstearat, Fettsäureamide/-imide, Lecithine, Mono- bzw. Diglyceride, welche in einer Konzentration von 0,5 bis 5 Gew.-%, vorzugsweise 0,7 bis 1,5 Gew.-%, bezogen auf das Gesamtgewicht der Zusammensetzung enthalten sind.

Plastifizierungsmittel sind beispielsweise Polyalkylenoxide, vorzugsweise Polyethylenglykole oder Polypropylenglykole, deren endständigen Hydroxylgruppen verestert oder verethert sind, Ethylenglykol, Propylenglykol, Sorbitol, Glycerin, Mono- und/oder Polyglycerin, Glycerinmono-, -di- oder -triacetat, Harnstoff, Glycin, Prolin, Zein, Pentaerythrit, Triethylcitrat, Tributylcitrat, Fettalkohole, wie Stearylalkohol, sowie weitere an sich bekannte Plastifizierungsmittel.

Modifikatoren der Zugfestigkeit, Steifigkeit, Schlagzähigkeit, Weiterreißfestigkeit und Verarbeitungsviskosität sind beispielsweise andere kommerziell erhältliche, biologisch abbaubare Werkstoffe (BAW), wie Polyester, Copolyester (Ecoflex BASF), Polyhydroxycarbonsäuren (Ecopla Dow/Cargill), Polyesteramide (BAK Bayer), andere BAWs, sowie Calcium-, Magnesium-, Zinksalze von Hydroxycarbonsäuren und von Harzsäuren; ebenso kristalline Polyole und Polyol-/Etherverbindungen wie zum Beispiel Di(Trimethylolpropan). Ähnliche Modifizierungen werden durch Stoffe wie Talkum, Schichtsilikate und Pflanzenfasern erreicht. Diese Modifikatoren sind in Konzentrationen von 0,1-30 Gew.-%, vorzugsweise 1-20 Gew.-%, bevorzugt 2-10 Gew.-%, enthalten.

Stabilisatoren sind beispielsweise an sich bekannte Antioxidantien, UV-Absorber, UV-Quencher, Bakterizide oder Fungizide und werden in an sich bekannten Mengen verwendet.

Flammschutzmittel sind beispielsweise Stickstoff, Phosphor, Schwefel oder Halogen enthaltende Verbindungen, oder Mischungen derselben. Solche Flammschutzmittel sind an sich bekannt. Die Flammschutzmittel sind insbesondere in Mengen von 0,1-10 Gew.-%, vorzugsweise von 1-6 Gew.-%, und meist bevorzugt von 2-4 Gew.-%, bezogen auf das Gesamtgewicht der Zusammensetzung enthalten.

Als Farbstoffe, anorganische oder organische Pigmente werden vorzugsweise an sich bekannte bioabbaubare oder ökologisch verträgliche Farbstoffe/Pigmente in an sich bekannter Menge eingesetzt. Nukleierungsmittel sind beispielsweise die genannten Füllstoffe oder Magnesiumsilikat (Microtalcum) mit einer Teilchengröße von ca. 0,1 bis 5 µm. Diese sind vorzugsweise in einer Konzentration von 0,1-3 Gew.-%, vorzugsweise 0,1-0,5 Gew.-%, enthalten.

Verschäumungsmittel sind an sich bekannt, wie z.B. eine Kombination von Natriumbicarbonat mit Zitronensäure und ähnliche kommerziell erhältliche Verschäumungsmittel. Es ist auch möglich, gasförmiges Stickstoff- oder Kohlendioxid der im Extruder geschmolzenen Zusammensetzung direkt zuzusetzen. Ebenso ist es möglich, die erfindungsgemäße Zusammensetzung mit Calciumcarbonat und 12-Hydroxysteaerinsäure während eines Extruderprozesses zu vermischen und mit Hilfe des entstehenden Kohlendioxides zu schäumen. Das Verschäumungsmittel setzt man vorzugsweise in einer Konzentration von 0,1-2 Gew.-% bezogen auf das Gesamtgewicht der Zusammensetzung zu.

Die erfindungsgemäße Zusammensetzung kann wie herkömmliche thermoplastische Materialien verarbeitet werden unter Verwendung einer herkömmlichen Vorrichtung, welche beispielsweise geeignet ist für Schlauchfolienherstellung, Blasformen, Extrudieren und Coextrusion (Stab-, Rohr- und Filmextrusion), Pressformen, Spritzgussverarbeitung, Rakeln, Schäumen, Gießverfahren oder weitere an sich bekannte Verarbeitungsverfahren, um an sich bekannte Gegenstände herzustellen. Diese Artikel umfassen beispielsweise Folien, Beutel, Säcke, Rohre, Stäbe, Flaschen, Becher, Verpackungsmaterialien und sonstige an sich bekannte Gegenstände in allen Verarbeitungsstufen von Pulvern, Granulaten über die Halbzeuge bis zum fertigen Gegenstand. Zur Eigenschaftsvariation können die oben genannten Gegenstände einschichtig, mehrschichtig oder in anderer an sich bekannten Weise hergestellt werden; hierbei kann die erfindungsgemäße Zusammensetzung mit anderen Werkstoffen kombiniert und als Deck- und/oder Trägerschicht eingesetzt werden. Die Folien können hierbei im ungereckten sowie im kalt- oder warmgereckten Zustand weiterverarbeitet sein. Dabei sind die kaltgereckten Folien sehr weich und verfügen über einen sogenannten Softtouch. Verwendung finden diese Gegenstände hauptsächlich in Bereichen, bei denen die Entsorgung bisher ein größeres Problem dargestellte, wie z.B. im Bereich der Landwirtschaft als Agrarfolie oder Pflanzentöpfe, im Entsorgungsbereich als Kompostbeutel, im Verpackungsbereich als Tragetaschen, Schrumpffolien, Shampooflaschen, Becher oder Essbesteck. Im weiteren können z.B. auch Schlauchfolien zur Herstellung von Tüten und Beuteln, Agrarfolien, Spritzguss- und Blasformartikel, Hot Melts und Spachtelmassen hergestellt werden. Ebenso ist die Oberflächenbeschichtung wasserempfindlicher Produkte möglich. Die weichen gereckten Folien können als Barriereschicht beispielsweise in Papiertaschentüchern oder bei anderen Hygieneanwendungen, das "Durchnässen" von Papiervliesen verhindern.

Die erfindungsgemäße Zusammensetzung kann auf unterschiedliche Weise hergestellt werden, z.B. durch Rühren der aufgeschmolzenen Komponenten (A) und (B) in einem Behälter und gleichzeitiger oder anschließender Zugabe der Zusatzstoffe; durch Mischen aller Komponenten in Einschneckenextrudern, gleichläufigen oder gegenläufigen Doppelschneckenextrudern, Planetwalzenextrudern; durch Einpumpen der Bestandteile in einen statischen Mischer; oder durch andere an sich bekannte geeignete Mischverfahren, die durch ihre Temperaturführung, Scherung, Druck und Verweilzeit geeignet sind, die Komponenten homogen zu vermischen. Es ist ebenso möglich, Vorprodukte herzustellen, welche dann zu dem erfindungsgemäßen Produkt zusammen gemischt werden können.

Die erfindungsgemäßen Mischungen zeichnen sich durch eine variabel einstellbare Schmelzviskosität aus, wodurch problemlos Anwendungsbereiche von der Papierbeschichtungen bis zur Blasfolie bearbeitet werden können. Die Elastizität bzw. Festigkeit kann weitestgehend beeinflusst werden, wobei man vergleichsweise steife bis elastische Folien erhalten kann.

### Beispiele 1 bis 6, Vergleichsbeispiele 7 und 8

### Verfahrensaufbau:

Labor-Z-Vakuumkneter mit Austragschnecke (LINDEN LK III 1 A) Misch- und Austragsbereich in V4A-Stahl (Werkstoff-Nr.: 1.4571 / 1.4581)

| | |
|---|---|
| Öl-Thermostat: | (Lauda USH 400) |
| Dosiervibrationsrinne: | (Fritsch Laborette) |
| Granulator: | (Collin CSG 171 T) |

### Verfahrensablauf für Beispiele 1 bis 6:

Polycaprolacton [Komponente (A)] wird im Laborkneter batchweise über eine Dosierrinne zugegeben und bei 120°C Massetemperatur aufgeschmolzen. Unter weiterem Mischen und Kneten wird Castorwachs [Komponente (B)] zugegeben. Aufgrund des hohen Anteils an Castorwachs bildet sich bei 120°C anfänglich während etwa 15-20 Minuten ein inhomogenes Gemisch, bis durch Diffusion und Verteilung wieder eine homogene und knetbare Mischung entsteht. Nach weiteren 15 Minuten Knetvorgang wird die Mischung auf 90-95°C rasch abgekühlt und anschließend mittels der Austragsschnecke über die Lochdüse zu einem Strang extrudiert. Dieser Strang wird im Wasserbad abgekühlt und anschließend granuliert. Bei der Verarbeitung ist auf eine gute Vermischung und Knetung zu achten. Die einzelnen Zusammensetzungen sind in Tabelle 2 zusammengestellt.

**Tabelle 2**

| Beispiele Nr | | 1 | 2 | 3 | 4 | 5 | 6 | 7 | 8 |
|---|---|---|---|---|---|---|---|---|---|
| Tone® P787 | Union Carbide | 300g | 350g | | | | | 500g | |
| Capa® 680 | Solvay | | | 300g | 350g | | | | 500g |
| Capa® 650 | Solvay | | | | | 300g | 350g | | |
| Loxiol® G15 | Cognis | 200g | 150g | 200g | 150g | 200g | 150g | | |
| DSC Kurve | | Fig.2 | Fig.3 | | | | | Fig.1 | |

In Tabelle 2 bedeuten:

| | |
|---|---|
| Tone® P787: PCL, | Molekulargewicht ca. 80.000 Schmelzpunkt ca. 60-62°C, |
| | MFI 1,0 (125°C, ASTM D1238-73) |
| Capa® 680: PCL, | Molekulargewicht ca. 80.000 Schmelzpunkt ca. 60-62°C, |
| | Kristallisationstemperatur 27,4°C Kristallinität 56%, |
| | MFI 0,6 (80°C, 2,16 kg g/10 min) |
| Capa® 650: PCL, | Molekulargewicht ca. 50.000 Schmelzpunkt ca. 60-62°C, |
| | Kristallisationstemperatur 25,2°C Kristallinität 56%, |
| | MFI 2,36 (80°C, 2,16 kg g/10 min) |
| Loxiol® G15: Castorwachs, | Schmelzpunkt 83-90°C |
| | Jodzahl 0-5 |
| | Säurezahl 0-5 |
| | Verseifungszahl 175-185 |
| | Hydroxylzahl 140-165 |

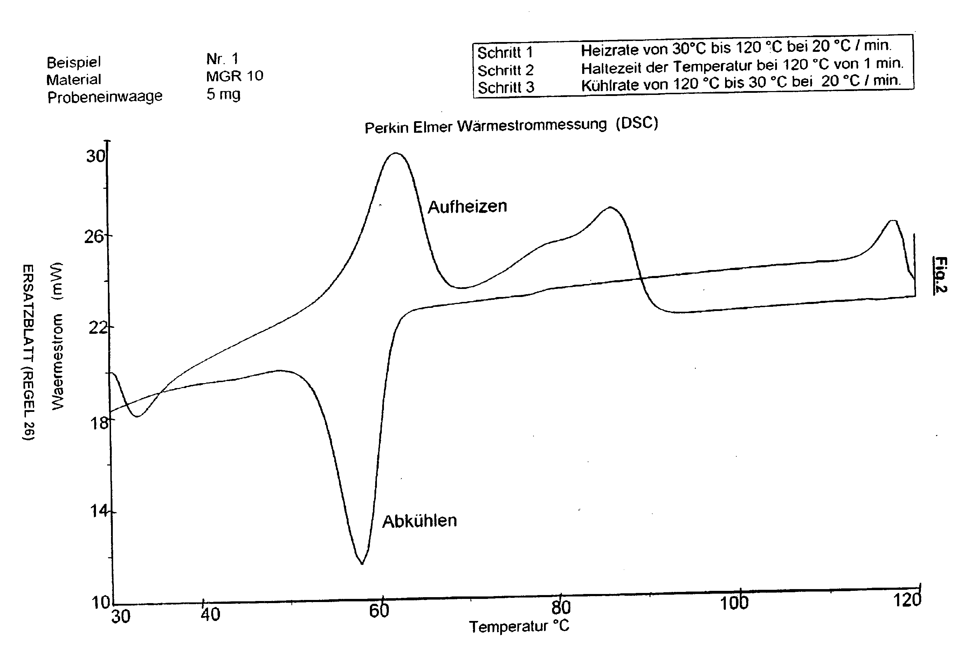

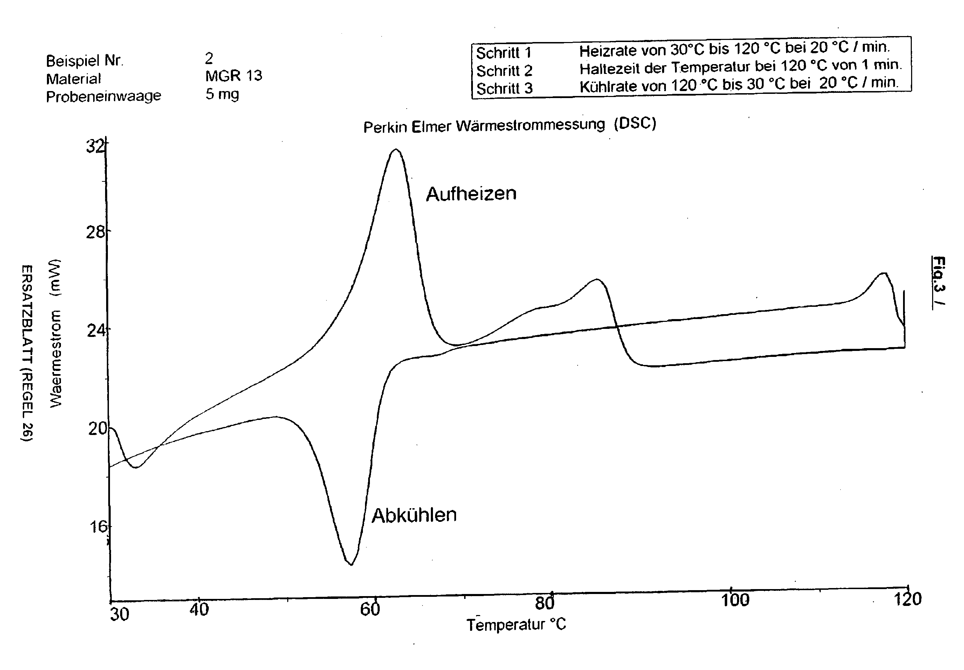

Die Zusammensetzungen der Beispiele 1 bis 6 zeichnen sich durch eine sehr gute Verarbeitbarkeit aus, welche besonders bei der Folienherstellung veranschaulicht werden kann. Bei der Blasfolienherstellung ist es vorteilhaft, wenn die verarbeiteten Materialien über einen ausgeprägten Kristallisationspunkt verfügen - siehe DSC Kurve Bild 2 und 3 - und dieser sich deutlich oberhalb der Raumtemperatur befindet, so dass sich die Folie ohne größeren technischen Aufwand nach Austritt aus der Düse durch Luftkühlung verfestigten lässt. Dies ist bei reinem PCL (Vergleichsbeispiele 7 und 8) nicht der Fall - siehe DSC Kurve Bild 1 -, da sich der Kristallisationsbereich bei < 35°C befindet und deshalb für die Verfestigung eine spezielle Kühlung eingesetzt werden muss. Bei den Zusammensetzungen gemäß den Beispielen 1 bis 6 ist dies nicht notwendig, da die Kristallisationstemperatur bei ca. 58°C liegt. Reines Castorwachs ist spröde und lässt sich mittels Extrusion nicht zu Blasfolien verarbeiten.

Mischungen mit hochmolekularem PCL zeigten ein gutes Aufblasverhalten bei der Herstellung von Blasfolien. Dabei konnte mit zunehmendem Wachsgehalt die Verarbeitungsviskosität und somit auch das Drehmoment und die Verarbeitungstemperatur gesenkt werden; die Kristallisationstemperatur der Zusammensetzung änderte sich bei der Variation des Wachsgehaltes nicht wesentlich. Auch bei hohen Wachsgehalten (40 Gew.-%) in der erfindungsgemäßen Zusammensetzung ergeben sich fast gleichwertige mechanische Eigenschaften im Vergleich zu reinem Polycaprolacton. Ebenso konnten sehr dünne Folienstärken bis zu 8 µm erzielt werden, was für biologisch abbaubare Werkstoffe außergewöhnlich ist.

Durch die Zugabe eines weiteren Wachses kann beispielhaft aufgezeigt werden, wie durch die Kombination von mehreren Wachsen - als Komponente B der erfindungsgemäße Zusammensetzung - die Schmelzviskosität noch variabler eingestellt werden kann. Dies ermöglicht das Erreichen von höheren Viskositäten, welche z.B. beim Tiefziehen und Blasformen notwendig sind. Gleichzeitig wird mit dieser Komponente die Zähigkeit und Steifigkeit der Produkte gesteigert.

Aufgrund des ausgeprägten Gelierungsverhalten der Metallseifen erweist sich eine Vormischung der Komponenten in Tabelle 3 (Beispiele 9-11) als vorteilhaft und ermöglicht eine stippenfreie Mischung der erfindungsgemäßen Zusammensetzung. Diese Mischungen ermöglichen einerseits eine Erhöhung der Verarbeitungsviskosität im Vergleich zum Beispiel 15 und ein verbessertes Kristallisationsverhalten zu der Ausgangsverbindung Polycaprolacton (CAPA 680)

### Beispiele 9 bis 12:

### Verfahrensaufbau zur Herstellung einer Vormischung:

Magnetrührer mit Heizplatte IKAMAG RCT (Jahn und Kunkel) 1,5 1 Edelstahltopf (handelsüblich)

| | |
|---|---|
| Laborrührwerk: | (Heidolph RZR 50 L) |
| Laborrührwerkzeug: | (Propeller Kopf: 100 mm ) |

### Verfahrensablauf zur Herstellung einer Vormischung (Beispiele 9 bis 11)

LOXIOL® G15 [Komponente (B)] wird im Edelstahltopf batchweise zugegeben und bei 120°C Massetemperatur unter Rühren (50-200 U/min) aufgeschmolzen. Unter weiterem Mischen (200-500 U/min) wird LIGA® Calcium-12-oxystearat (siehe Beispiel 9-11) als Komponente(B I) zugegeben und die Mischung auf 160°C erhitzt. Danach wird die Mischung auf 140°C abgekühlt und in einer teflonisierten Wanne ausgegossen und zur Platte erstarren lassen. Diese Platte wird mit einer Reibemaschine (Schulte)- Reibeinsatz 1 für Feinkorn - gemahlen und im Verfahrensablauf (siehe Tabelle 4) weiterverarbeitet (siehe Beispiele 12-14).

### Tabelle 3:

| Beispiele Nr | | 9 | 10 | 11 |
|---|---|---|---|---|
| Loxiol® G15 (B) | Cognis | 475 g | 450 g | 400 g |
| LIGA® 12-oxystearat (B I) | Greven Fettchemie | 25 g | 50 g | 100 g |

### In Tabelle 3 bedeuten:

| | |
|---|---|
| Loxiol® G15: | Schmelzpunkt 83-90°C |
| (Castorwachs) | Jodzahl 0-5 |
| | Säurezahl 0-5 |
| | Verseifungszahl 175-185 |
| | Hydroxylzahl 140-165 |
| LIGA® Calcium-12-oxystearat: | Schmelzpunkt 135-147°C |
| (Calcium-12-hydroxystearat) | Freie Fettsäure < 1% |
| | Feuchtigkeit < 3% |

### Beispiele 12 bis 14, Vergleichsbeispiel 15

### Verfahrensaufbau:

Labor-Z-Vakuumkneter mit Austragschnecke (LINDEN LK III 1 A) Misch- und Austragsbereich in V4A-Stahl (Werkstoff-Nr.: 1.4571 / 1.4581)

| | |
|---|---|
| Öl-Thermostat: | (Lauda USH 400) |
| Dosiervibrationsrinne: | (Fritsch Laborette) |
| Granulator: | (Collin CSG 171 T) |

### Verfahrensablauf für Beispiele 12 bis 14, Vergleichsbeispiel 15:

Polycaprolacton [Komponente (A)] wird im Laborkneter batchweise über eine Dosierrinne zugegeben und bei 120°C Massetemperatur aufgeschmolzen. Unter weiterem Mischen und Kneten werden die gemahlenen Vormischungen Beispiele 9-11 als [Komponente (B)] zugegeben. Nach weiteren 15 Minuten Knetvorgang bei 120-160°C wird die Mischung auf 100-110°C rasch abgekühlt und anschließend mittels der Austragsschnecke über die Lochdüse zu einem Strang extrudiert. Dieser Strang wird im Wasserbad abgekühlt und anschließend granuliert. Bei der Verarbeitung ist auf eine gute Vermischung und Knetung zu achten. Die einzelnen Zusammensetzungen sind in Tabelle 4 zusammengestellt.

**Tabelle 4:**

| Beispiele Nr | | 12 | 13 | 14 | 15 |
|---|---|---|---|---|---|
| Capa® 680 | Solvay | 300 g | 300 g | 300 g | 300 g |
| Vormischung | Beispiel Nr. 9 | 200 g | | | |
| Vormischung | Beispiel Nr. 10 | | 200 g | | |
| Vormischung | Beispiel Nr. 11 | | | 200 g | |
| Loxiol G 15 | Cognis | | | | 200 g |

In Tabelle 4 bedeuten:

| | | |
|---|---|---|
| Capa® 680: | PCL, | Molekulargewicht ca. 80.000 Schmelzpunkt ca. 60-62°C, |
| | | Kristallisationstemperatur 25,2°C Kristallinität 56%, |
| | | MFI 0,6 (80°C, 2,16 kg g/10 min) |

Vormischung Beispiele 9 bis 11: siehe Tabelle 3

## Patentansprüche

1. Zusammensetzung, enthaltend
(A) mindestens ein kristallines Polycaprolacton (PCL) oder ein Gemisch solcher Polycaprolactone sowie
(B) mindestens ein Wachs mit einem Schmelzpunkt im Bereich von 50°C bis 180°C oder eine Mischung solcher Wachse und
(C) gegebenenfalls weitere Zusatzstoffe,
**dadurch gekennzeichnet, dass** das Wachs der Komponente (B) aus der Gruppe Castorwachs, d.h. teilweise oder gänzlich gehärtetes (hydriertes) Rizinusöl, gewählt ist, wobei das Gewichtsverhältnis der Komponente (A) zur Komponente (B) im Bereich von etwa 05:95 bis 95:05 Liegt.

2. Zusammensetzung nach Anspruch 1, **dadurch gekennzeichnet, dass** die Komponente (A) hoch kristallines Polycaprolacton mit einem Molekulargewicht von etwa 20.000 bis 180.000, einem Schmelzbereich von etwa 50°C bis 120°C und einer Kristallisationstemperatur unter 40°C aufweist.

3. Zusammensetzung nach Anspruch 2, **dadurch gekennzeichnet, dass** der Schmelzbereich der Komponente (A) zwischen 58°C und 62°C beträgt.

4. Zusammensetzung nach einem der Ansprüche 1 bis 3, **dadurch gekennzeichnet, dass** das Gewichtsverhältnis der Komponente (A) zur Komponente (B) im Bereich von etwa 20:80 bis 80:20, insbesondere im Bereich von etwa 40:60 bis 70:30, liegt.

5. Zusammensetzung nach einem der Ansprüche 1 bis 4, **dadurch gekennzeichnet, dass** die Komponente (B) ein gehärtetes Rizinusöl (Castorwachs) mit einem Schmelzpunkt zwischen etwa 81°C und 92°C aufweist.

6. Zusammensetzung nach einem der Ansprüche 1 bis 4, **dadurch gekennzeichnet, dass** die Komponente (B) ein gehärtetes Rizinusöl (Castorwachs) mit einem Schmelzpunkt zwischen etwa 83°C und 88°C aufweist.

7. Zusammensetzung nach einem der Ansprüche 1 bis 6, **dadurch gekennzeichnet, dass** die Komponente (B) ein Gemisch eines Hydroxycarbonsäureamides mit Resten von (C₁-C₄₀)-Hydroxycarbonsäuren und (C₁-C₄₀)-Carbonsäuren oder mehrerer solcher Hydroxycarbonsäureamide mit Castorwachs aufweist, wobei das Hydroxycarbonsäureamid einen Schmelzbereich von 50°C bis 180°C, insbesondere von 70°C bis 180°C, aufweist.

8. Zusammensetzung nach Anspruch 7, **dadurch gekennzeichnet, dass** die Hydroxycarbonsäureamide aus der Gruppe der mit den Handelsnamen "Adogen 42", "Adogen 58" und "Adogen 73" (Ashland Chem. Corp.) bezeichneten Hydroxycarbonsäureamide gewählt sind.

9. Zusammensetzung nach einem der Ansprüche 1 bis 6, **dadurch gekennzeichnet, dass** die Komponente (B) ein Gemisch einer Metallseife einer Hydroxycarbonsäure oder mehrerer solcher Metallseifen mit Castorwachs aufweist, wobei die Metallseife der Hydroxycarbonsäure einen Schmelzbereich von 50°C bis 180°C, insbesondere von 70°C bis 180°C, aufweist.

10. Zusammensetzung nach Anspruch 9, **dadurch gekennzeichnet, dass** die Metallseife einer Hydroxycarbonsäure ein Hydroxycarbonsäuresalz aus der Gruppe Calcium, Magnesium und Zink, insbesondere aus der Gruppe Calcium-12-oxystearat und Magnesium-12-hydroxystearat, ist.

11. Zusammensetzung nach einem der Ansprüche 1 bis 10, **dadurch gekennzeichnet, dass** sie weitere Zusatzstoffe enthält, welche ausgewählt sind aus der Gruppe der Füllstoffe, Gleitmittel, Plastifizierungsmittel, Stabilisatoren, Flammschutzmittel, Farbstoffe, anorganische und organische Pigmente, Verschäumungsmittel, sowie Modifikatoren der Zugfestigkeit, Steifigkeit, Schlagzähigkeit, Weiterreißfestigkeit, Verarbeitungsviskosität, oder sonstige an sich in der Polymerchemie bekannte Zusatzstoffe.

12. Zusammensetzung nach einem der Ansprüche 1 bis 11, **dadurch gekennzeichnet, dass** sie unter Verwendung einer herkömmlichen Vorrichtung verarbeitet worden ist, welche geeignet ist für Schlauchfolienherstellung, Blasformen, Tiefziehen, Extrudieren und Coextrudieren (Stab-, Rohr- und Filmextrudieren) Pressformen, Spritzgießen, Rakeln, Schäumen, Gießen, Sprüh-, Streich- Laminier- und Tauchverfahren.

13. Gegenstände in Form von Folien, Beuteln, Säcken, Rohren, Stäben, Flaschen, Bechern, Verpackungsmaterialien, jeweils gegebenenfalls in einschichtiger oder mehrschichtiger Form, kalt oder warmgereckt, geschäumt, als Pulver, Granulate oder Halbzeuge, welche hergestellt sind aus einer Zusammensetzung nach einem der Ansprüche 1 bis 12.

14. Gegenstände in Form von Agrarfolien, Pflanzentöpfen, Kompostbeuteln, Tragetaschen, Shampooflaschen, Tellern, Platten, Essbestecken, Schlauchfolien zur Herstellung von Tüten und Beutel, Spritzguss- und Blasformartikeln, Hot Melts oder Spachtelmassen, welche hergestellt sind aus einer Zusammensetzung nach einem der Ansprüche 1 bis 12.

15. Gegenstände nach Anspruch 14 mit einer Oberflächenbeschichtung aus einer Zusammensetzung nach einem der Ansprüche 1 bis 12.

16. Verfahren zur Herstellung einer Zusammensetzung nach einem der Ansprüche 1 bis 12, **dadurch gekennzeichnet, dass** die aufgeschmolzenen Komponenten (A) und (B) in einer geeigneten Vorrichtung gemischt und zugleich oder anschließend die gegebenenfalls anwesenden Zusatzstoffe zugegeben werden.

## Claims

1. Composition containing
(A) at least one crystalline polycaprolactone (PCL) or a mixture of such polycaprolactones and
(B) at least one wax having a melting point in the region between 50°C and 180°C or a mixture of such waxes and
(C) optionally further additives,
**characterized in that** the wax of the component (B) is selected from the group of castor waxes, i.e. partially or completely hardened (hydrated) castor oil, wherein the weight ratio between the component (A) and component (B) is between approximately 05:95 and 95:05.

2. Composition according to claim 1, **characterized in that** the component (A) comprises highly crystalline polycaprolactone with a molecular weight of approximately 20,000 to 180,000, a melting range of approximately 50°C to 120°C, and a crystallization temperature of less than 40°C.

3. Composition according to claim 2, **characterized in that** the melting range of the component (A) is between 58°C and 62°C.

4. Composition according to any one of the claims 1 through 3, **characterized in that** the weight ratio between component (A) and component (B) is in a range of approximately 20:80 and 80:20, in particular, between approximately 40:60 to 70:30.

5. Composition according to any one of the claims 1 through 4, **characterized in that** the component (B) comprises a solidified castor oil (castor wax) having a melting point of between approximately 81°C and 92°C.

6. Composition according to any one of the claims 1 to 4, **characterized in that** the component (B) is a hardened castor wax having a melting point between about 83°C and 88°C.

7. Composition according to any one of the claims 1 to 6, **characterized in that** the component (B) is a mixture of hydoxycarboxylic acid amides with residual amounts of (C₁-C₄₀) hydroxy carboxylic acids and (C₁-C₄₀) carboxylic acids, or a plurality of such hydroxy carboxylic acids, with castor wax, wherein the hydroxy carboxylic acid amide has a melting temperature from 50°C to 180°C, in particular between 70°C and 180°C.

8. Composition of the claim 7, **characterized in that** the hydroxy carboxylic acid amides are selected from the group of hydroxy carboxylic acid amides comprising the commercial materials "Adogen 42", "Adogen 58", and Adogen 73" ( Ashland Chem. Corp.).

9. Composition according to any one of the claims 1 to 6, **characterized in that** the component (B) is a mixture of a metallic soap of a hydroxy carboxylic acid, or a plurality of such metallic soaps, with castor wax, wherein the metallic soap of the hydroxy carboxylic acid has a melting region of 50°C to 180°C, in particular between 70°C and 180°C.

10. Composition according to claim 9, **characterized in that** the metallic soap of a hydroxy carboxylic acid is a hydroxy carboxylic acid salt selected from the group comprising calcium, magnesium and zinc, in particular from the group comprising calcium-12-oxystearate and magnesium-12-hydroxystearate.

11. Composition according to any one of the claims 1 through 10, **characterized in that** it contains further additives which are selected from the group of fillers, sliding agents, plasticising agents, stabilizers, flame retardants, colorants, inorganic and organic pigments, foaming means and modifiers of tensile strength, rigidity, impact strength, resistance to tear propagation, processing viscosity, or other additives known per se in polymeric chemistry.

12. Composition according to any one of the claims 1 through 11, **characterized in that** it has been processed using a conventional device, which is suited for tube foil production, blow forming, deep drawing, extrusion and co-extrusion (rod, tube and film extrusion) press forming, injection molding, doctoring, foaming, casting, spraying, painting, lamination and immersion methods.

13. Objects in the form of foils, bags, sacks, tubes, rods, bottles, cups, packaging materials, each optionally in the form of one or several layers, cold or warm-stretched, foamed, as powder, granulated matter or semi finished products, produced from a composition in accordance with one of the claims 1 through 12.

14. Objects in the form of agricultural foils, plant pots, compost bags, carrier bags, shampoo bottles, plates, boards, cutlery, tube foils for the production of bags and sacks, injection molding and blow forming articles, hot melts or fillers produced from the composition in accordance with any one of the claims 1 through 12.

15. Objects according to claim 14, comprising a surface coating of a composition in accordance with any one of the claims 1 through 12.

16. Method for producing a composition according to any one of the claims 1 through 12, **characterized in that** the molten components (A) and (B) are mixed in a suitable device and the optional additives are added simultaneously or subsequently.

## Revendications

1. Composition comprenant
(A) au moins une polycaprolactone (PCL) critalline ou un mélange de telles polycaprolactones ainsi que
(B) au moins une cire dont le point de fusion se situe entre 50°C et 180°C ou un mélange de telles cires, et
(C) le cas échéant d'autres additifs,
**caractérisée en ce que** la cire du composant (B) est choisie dans le groupe des cires de ricin, c'est-à-dire de l'huile de ricin (hydratée) partiellement ou totalement durcie, le rapport du poids du composant (A) sur celui du composant (B) étant compris entre environ 05:95 et 95:05.

2. Composition selon la revendication 1, **caractérisée en ce que** le composant (A) comprend une polycaprolactone fortement cristalline dont le poids moléculaire est situé entre environ 20.000 et 180.000, avec une zone de fusion d'environ 50°C à 120°C et une température de cristallisation inférieure à 40°C.

3. Composition selon la revendication 2, **caractérisée en ce que** la zone de fusion du composant (A) est située entre 58°C et 62°C.

4. Composition selon l'une quelconque des revendications 1 à 3, **caractérisée en ce que** le rapport du poids du composant (A) sur celui du composant (B) est compris entre environ 20:80 et 80:20, plus particulièrement entre environ 40:60 et 70:30.

5. Composition selon l'une quelconque des revendications 1 à 4, **caractérisée en ce que** le composant (B) comprend une huile de ricin durcie (cire de ricin) dont le point de fusion se situe entre environ 81°C et 92°C.

6. Composition selon l'une quelconque des revendications 1 à 4, **caractérisée en ce que** le composant (B) présente une huile de ricin durcie (cire de ricin) dont le point de fusion se situe entre environ 83°C et 88°C.

7. Composition selon l'une quelconque des revendications 1 à 6, **caractérisée en ce que** le composant (B) comprend un mélange d'un amide d'acide hydroxycarboxylique avec un radical d'acide hydroxycarboxylique allant de C₁ à C₄₀ et un radical d'acide carboxylique allant de C₁ à ₄₀ ou de plusieurs de tels amides d'acides hydroxycarboxyliques avec de la cire de ricin, l'amide d'acide hydroxycarboxylique présentant une zone de fusion comprise entre 50°C et 180°C, plus particulièrement entre 70°C et 180°C.

8. Composition selon la revendication 7, **caractérisée en ce que** les amides d'acides hydroxycarboxyliques sont choisis dans le groupe des amides d'acides hydroxycarboxyliques connus sous le nom commercial de "Adogen 42", "Adogen 58" et "Adogen 73" (Ashland Chem. Corp.).

9. Composition selon l'une quelconque des revendications 1 à 6, **caractérisée en ce que** le composant (B) comprend un mélange d'un savon métallique d'un acide hydroxycarboxylique ou de plusieurs savons métalliques de ce genre et de cire de ricin, le savon métallique de l'acide hydroxycarboxylique présentant une zone de fusion comprise entre 50°C et 180°C, plus particulièrement entre 70°C et 180°C.

10. Composition selon la revendication 9, **caractérisée en ce que** le savon métallique d'un acide hydroxycarboxylique est un sel d'acide hydroxycarboxylique du groupe calcium, magnésium ou zinc, en particulier du groupe oxy-12 stéarate de calcium et hydroxy-12 stéarate de magnésium.

11. Composition selon l'une quelconque des revendications 1 à 10, **caractérisée en ce qu'**elle contient d'autres additifs, choisis dans le groupe des matières de remplissage, des lubrifiants, des plastifiants, des stabilisateurs, des agents ignifugeants, des colorants, des pigments minéraux et organiques, des moyens de moussage, ainsi que des modificateurs de la résistance à la traction, de la rigidité, de la résilience, de la résistance au déchirement, de la viscosité de traitement ou d'autres additifs connus en soi dans la chimie des polymères.

12. Composition selon l'une quelconque des revendications 1 à 11, **caractérisée en ce qu'**elle a été obtenue en utilisant un dispositif connu convenant pour la fabrication de feuilles tubulaires, le moulage par soufflage, l'emboutissage, l'extrusion et la coextrusion (extrusion sous forme de barres, de tubes et de films), le moulage par pression, le moulage par injection, le raclage, le moussage, la coulée, la technique des aérosols, de l'application à la brosse, du contrecollage et de l'immersion.

13. Objets sous forme de feuilles, de sachets, de sacs, de tubes, de barres, de bouteilles, de gobelets, de matériaux d'emballage, chacun respectivement sous une forme monocouche ou multicouche, étiré à froid ou à chaud, moussé, sous forme de poudre, de granulats ou de produits semi-finis, réalisés à partir d'une composition selon l'une quelconque des revendications 1 à 12.

14. Objets sous forme de films plastiques pour les cultures, de pots de fleurs, de sacs à compost, de sacoches, de bouteilles pour shampooing, d'assiettes, de plats, de couverts, de feuilles tubulaires pour la fabrication de sachets et sacs, d'articles moulés par injection et par soufflage, de matières thermofusibles ou de mastics, réalisés à partir d'une composition selon l'une quelconque des revendications 1 à 12.

15. Objets selon la revendication 14 présentant un revêtement de surface réalisé à partir d'une composition selon l'une quelconque des revendications 1 à 12.

16. Procédé de réalisation d'une composition selon l'une quelconque des revendications 1 à 12, **caractérisé en ce que** l'on mélange dans un dispositif approprié les composants (A) et (B) fondus et qu'on ajoute en même temps ou consécutivement les additifs présents le cas échéant.
